# EUROPEAN PATENT SPECIFICATION

(11) **EP 4 077 967 B1**
(45) Date of publication and mention of the grant of the patent: **02.07.2025**
(21) Application number: 20841764.2
(22) Date of filing: 16.12.2020
(51) Int. Cl.: F16G 1/28, F16G 5/20

(54) **POWER TRANSMISSION SYSTEM WITH POWER TRANSMISSION BELT**
ÜBERTRAGUNGSSYSTEM MIT TREIBRIEMEN
SYSTÈME DE TRANSMISSION DE PUISSANCE AVEC COURROIE DE TRANSMISSION DE PUISSANCE

(30) Priority: 16.12.2019 IT 201900024054
(43) Date of publication of application: 26.10.2022
(73) Proprietor: Dayco Europe S.R.L., 66100 Chieti (IT)
(72) Inventor: DI MECO, Marco, 66100 CHIETI (IT); DI CARLO, Arcangelo, 66100 CHIETI (IT); PIERMATTEO, Carlo, 66100 CHIETI (IT); CIPOLLONE, Franco, 66100 CHIETI (IT); DELLI ROCIOLI, Massimiliano, 66100 CHIETI (IT)
(74) Representative: Studio Torta S.p.A.
(86) International application number: PCT/IB2020/062049
(87) International publication number: WO 2021/124162

(56) References cited:
- EP-A1- 1 217 256
- EP-A1- 1 270 994
- JP-A- 2000 018 332
- JP-A- 2016 109 249
- US-A- 5 382 198
- US-A- 5 704 862

## Description

### CROSS-REFERENCE TO RELATED APPLICATIONS

This patent application claims priority from Italian patent application no. 102019000024054 filed on 16/12/2019.

### TECHNICAL FIELD

The present invention concerns a transmission system comprising a belt and, in particular, preferably a belt for use in hybrid engines and the relative transmission system.

### PRIOR ART

The present invention is used preferably for the transmission of motion in a transmission system of a motor vehicle comprising an internal combustion engine and a reversible electric machine such as, for example, a transmission system for hybrid engines.

In hybrid engines the transmission belt must be able to transmit the motion in both directions due to the different functions of the hybrid systems, namely in a first direction to transmit the motion for the movement of the vehicle and in a second direction to charge the battery for subsequent operation of the electric motor.

In transmission systems where the speed is high and above 40 m/s and in some particular cases, as in hybrid engines, even 70-90 m/s can be reached, the use of toothed belts is very problematic due to the high noise level. When the speed increases the tension must also be increased because the centrifugal force tends to move the belt away from the pulleys.

Furthermore if the speed is high, the wear on the belt will be more rapid.

A transmission system and relative belt able to offer optimal performance and low noise level also in engines operating at high speed and high torque, for example hybrid engines, is therefore desirable.

JP2000018332 discloses a friction transmission and mesh transmission including one transmission belt B provided with a prescribed pitch in the belt length direction on the inner surface of the belt main body of a transmission belt and on the tips of teeth, plural grooves with nearly triangle section extending to the belt length direction formed at a prescribed intervals in the belt width direction.

EP1217256 discloses a drive system comprising a driver pulley, a driven pulley (22), and a belt (10). The belt (10) has a pulley engaging surface (16) comprised of a plurality of transversely extending self-tracking teeth (18). The driven pulley (22) has a non-grooved, crownless belt engaging surface (24). The material (20) forming the pulley engaging surface (16) of the belt (10) having a relatively low coefficient of friction, and the material (28) forming the belt engaging surface (24) of the driven pulley (22) having a relatively high coefficient of friction.

### OBJECT OF THE INVENTION

The object of the present invention is to obtain a transmission belt that allows the transmission of a high torque at high rotation speed maintaining a low noise level and having at the same time a high resistance to wear so as to obtain a prolonged average life.

A further object of the present invention is to obtain a belt transmission system comprising an internal combustion engine, an electric machine and a transmission belt able to solve the above-mentioned problems.

According to the present invention said object is achieved by a transmission system according to claim 1.

### BRIEF DESCRIPTION OF THE DRAWINGS

For a better understanding of the present invention, it is now described also with reference to the attached figures that illustrate:
- figure 1 is a schematic frontal view of a preferred embodiment of a belt transmission system according to the present invention;
- figure 2 is a perspective and partial schematic view of a portion of transmission belt according to the present invention together with an enlargement of a detail of said belt.

### DISCLOSURE OF THE INVENTION

Below, by "toothing" of a belt we mean multiple sets of transverse teeth arranged at an equally spaced distance and alternating with hollows. Each set of teeth of the toothing has multiple teeth substantially positioned side by side.

Each tooth and therefore each set of teeth and therefore the entire toothing of the belt are capable to cooperate with a toothed pulley to transmit power, for example to transmit the power from an engine to the axle of a vehicle.

The toothed pulley will have a shape equal and opposite to the belt so as to allow transmission of the motion when the teeth engage in the hollows of the pulley.

The teeth can have various shapes, but generally the shape is similar to a truncated pyramid and in section to a trapezium and is followed by a set of hollows having dimensions and shapes comparable to those of the teeth, but in any case, suitable for housing a corresponding set of teeth present on the toothed pulley.

The upper surface of the teeth can be non-linear, for example convex, for example forming an upturned or concave U or forming complex shapes so as to better engage with pulleys of corresponding shapes. Typically in toothed belts, the teeth alternate with hollows having a corresponding shape, whereas in the toothed pulleys there are corresponding teeth and hollows that allow engagement with hollows and teeth of the toothed belt.

A toothed belt comprising a toothing, is therefore different from a belt in which a set of grooves, for example V-shaped, has been obtained. In fact, an equivalent pulley having upturned V-shaped ribs would not be able to position the ribs in the grooves during rotation.

The toothing must always be correctly sized because toothed belts are used when it is important to transmit a high power without losses caused by slipping.

Poly-V belts do not have teeth but grooves or ribs in a longitudinal and not latitudinal direction and do not transmit the motion for engagement of the tooth by friction of the entire working surface, but by friction on the working surface.

A toothing of a toothed belt that can be used for transmitting the motion in a vehicle must therefore generally have teeth larger than the ribs of a poly-V belt used to move the accessory members such as a water pump.

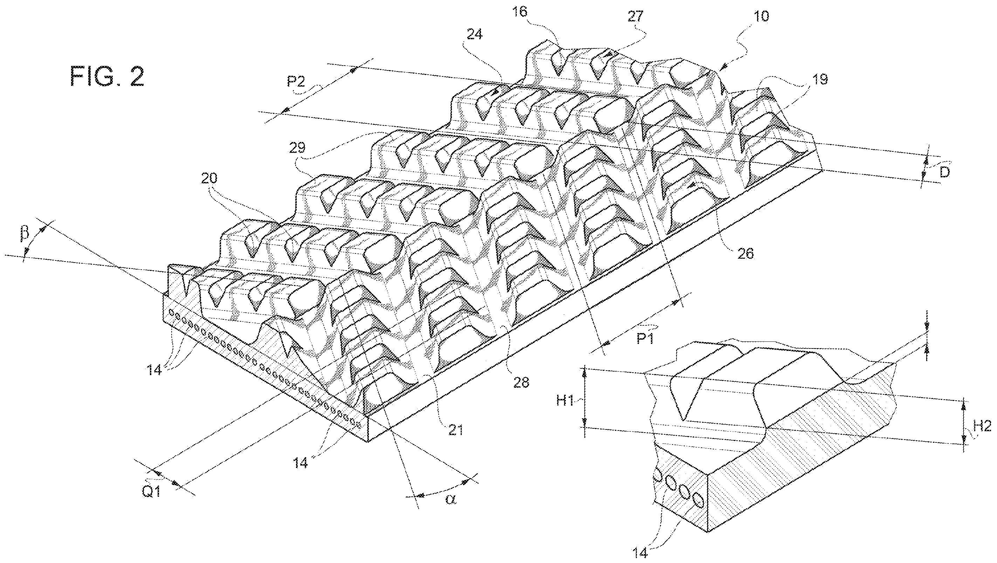

Below, by "helix angle" we mean the angle between the transverse axis A of the belt which also defines the width and the axis of the teeth, as also shown in figure 2.

In the case of ordinary toothed belts with non-oblique toothing, the helix angle is therefore 0°.

By convention, positive angle means the angle calculated between the axis A and the angle of the toothing in a clockwise direction, whereas negative angle means the angle in an anticlockwise direction.

Below, a preferred embodiment of the invention is described in which the belt is applied to a transmission system with an electric machine, but the invention can also be advantageously used in different transmission systems and wherever the problems described above are present.

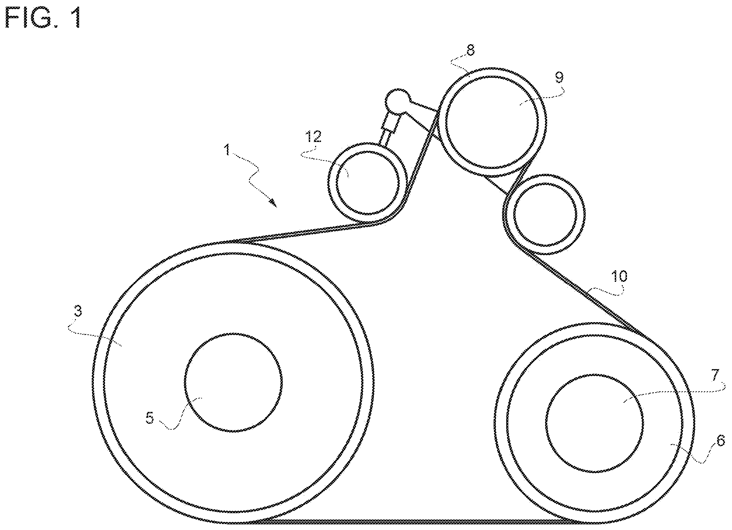

In figure 1, the number 1 indicates overall a belt transmission system for a motor vehicle, designed to transmit the motion between an internal combustion engine and a reversible electric machine, which is able to perform both the function of transmitting the motion and charging the vehicle electric batteries (not illustrated), when it is driven by the engine in normal operating conditions.

The system 1 comprises a poly-V pulley 3 fitted on the drive shaft 5 of the engine, a poly-V pulley 6 fitted on the shaft driving the compressor 7, a toothed pulley 8 fitted on the shaft of the electric machine 9, and a transmission belt 10, which is wound around the pulleys 3, 6, 8 to transmit the motion between the above-mentioned shafts and is generally, but not necessarily, subject to the tensioning action of a tensioner 12, for example as in the embodiment illustrated in figure 1, of dual-arm type, known per se and therefore not described in detail.

With reference to figure 2, the belt 10 comprises a body 13 comprising a first elastomeric material which incorporates a plurality of longitudinal filiform resistant inserts 14 or "cords".

The belt 10 comprises a plurality of longitudinal ribs 19 which extend in a cantilever manner from an inner surface 16 of the body 13 and have in cross section a substantially V-shaped profile. The ribs 19 are positioned side by side along the width of the body 13 and define transversally between one another a plurality of longitudinal grooves 20, also substantially V-shaped, delimited by sides 24. The ribs 19 have a constant pitch Q1, namely the distance between two grooves, preferably between 2 and 5 mm, more preferably between 3 and 4 mm, for example 3.56.

The belt 10 furthermore has a plurality of transverse hollows 21, which are equally spaced from one another along the belt and are obtained through the ribs 19, so that they interrupt the ribs 19 in a series of successive sections defining respective teeth 28 of the belt 10 forming a toothing 26.

The belt 10 therefore has both ribs and teeth and is therefore both a poly-V belt and a toothed belt and for this reason can engage both on a poly-V pulley and on a toothed pulley.

According to the present invention the toothing 26 is helical.

In other words, the belt comprises both ribs and teeth, but the teeth do not extend transversally as in the normal toothed belts but obliquely so as to form an oblique toothing 26.

Preferably the belt has at least two distinct sets of teeth, a first toothing 26 and a second toothing 27 both helical and provided with respective teeth 28 and 29.

The first toothing and the second toothing are preferably distinct. The first toothing does not coincide with and is not the same as the second toothing.

Preferably the teeth 28 and 29 are uniformly spaced in the longitudinal direction by their pitches P1 and P2 and both extend obliquely to the transverse direction forming a first and a second alpha and beta helix angle respectively relative to the transverse axis A of the belt, as shown in Fig. 2.

Therefore, when the teeth have an opposite helix angle it is defined a positive and negative helix angle.

Preferably the first toothing 26 has a pitch P1 ranging from 5 to 14 mm, more preferably ranging from 8 to 11 mm, and the second toothing 27 has a pitch P2 ranging from 5 to 14 mm, more preferably from 8 to 11 mm.

The alpha and beta helix angles can vary preferably from 10° to 45° or from -45° to -10° relative to the axis W, more preferably from 10° to 20° or from -20° to -10°.

Preferably the alpha and beta helix angles formed by the first and second toothing 26 and 27 in the transversally adjacent rows have opposite helix angles relative to the same axis A as shown in the embodiment of figure 2, more preferably have a helix angle having the same absolute value but opposite sign, as shown in figure 2, for example an alpha angle +15° and a beta angle - 15°.

Preferably the two toothings 26, 27 are staggered relative to each other.

Preferably the two toothings 26, 27 are staggered by a distance D.

Preferably the distance D is between 10% and 90% of the largest between P1 and P2.

Even more preferably the distance D is between 25 and 75% of the largest between P1 and P2, even more preferably the distance D is 50% of the pitch P.

Alternatively, the two toothings are not staggered and therefore the distance D is equal to 0.

When the belt is in use in the system shown in Fig. 1, since it is provided with teeth and ribs, it can engage in sequence both on the toothed pulley 8 and on the poly-V pulleys 3 and 6.

In the transmission system of the present invention preferably the toothed pulley is the pulley with smaller diameter.

Preferably the height of the teeth of the toothings 26, 27 is greater than the height of the ribs 20 as in the embodiment illustrated in figure 2.

More preferably the height of the teeth ranges from 2.5 to 7 mm, while the height of the ribs preferably ranges from 2 to 5 mm.

Preferably the body 13 is made of a compound comprising one or more elastomeric materials and numerous additives. The elastomeric material/s are indicated overall for convenience below as "first elastomeric material".

The body of the belt advantageously comprises a first elastomeric material chosen from the group consisting of natural rubber (NR), polychloroprene (CR), butadiene-acrylonitrile rubber (NBR) and relative hydrogenated elastomers known as hydrogenated nitrile butadiene rubbers (HNBR) or zinc salts of hydrogenated acrylonitrile butadiene rubber grafted with esters of unsaturated carboxylic acid, polyisoprene, styrene-butadiene rubbers, ethylene-alpha-olefin elastomers, EPDM, polyurethane, fluoroelastomers, ethylene acrylic elastomers (AEM), bromobutyl, chlorosulfonated polythene (CSM) or chlorosulfonated alkyl, chlorinated polythene, epoxidized natural rubber, SBR, carboxylated NBR, carboxylated HNBR, ACM and mixtures of these compounds.

Advantageously the first elastomeric material is present in the body compound as "main elastomer", namely it is present in the body compound for over 50% by weight calculated on the total weight of all the elastomers in the compound, therefore excluding all the other non-elastomeric components of the belt.

The body preferably comprises as first or as further elastomeric material at least a copolymer of polyolefin or a rubber containing units of acrylonitrile.

More advantageously the copolymer/s used as body compounds are nitrile rubbers, advantageously they are butadiene-acrylonitrile rubbers, known by the acronym NBR. Even more advantageously they are hydrogenated nitrile butadiene rubbers or HNBR or also XHNBR, namely hydrogenated and carboxylated nitrile butadiene rubbers.

For example highly saturated HNBR, therefore having a residual percentage of double bonds greater than 0.9%, can be used but alternatively HNBR with a lower degree of unsaturation can also be used such as, for example, HNBR having a degree of saturation of 4% or 5.5%, known as partially saturated.

Some examples of HNBR copolymers that can be used in the body compound, and also in the different treatments of the various component elements of the toothed belt, are the copolymers belonging to the THERBAN family produced by Lanxess, like THERBAN 3407 with 34% of nitrile groups and a degree of hydrogenation greater than 0.9 %, THERBAN 3406 with 34% of nitrile groups and a degree of unsaturation greater than 0.9%, THERBAN 3607 with 36% of nitrile groups and a degree of unsaturation greater than 0.9%, THERBAN 3446 with 34% of nitrile groups and a degree of unsaturation greater than 4%, THERBAN 3447 with 34% of nitrile groups and a degree of unsaturation greater than 5.5 %, THERBAN 3627 with 36% of nitrile groups and a degree of unsaturation greater than 2%, THERBAN 3629 with 36% of nitrile groups and a degree of unsaturation greater than 2%, THERBAN 3907 with 39% of nitrile groups and a degree of unsaturation greater than 0.9%.

Alternatively, it is also possible to use the HNBR produced by Nippon Zeon under the name ZETPOL. In particular, ZETPOL 2000 with 36% of nitrile groups and a degree of unsaturation greater than 0.9%, ZETPOL 2000L with 36% of nitrile groups and a degree of unsaturation greater than 0.9%, ZETPOL 2010 with 36% of nitrile groups and a degree of unsaturation greater than 4%, ZETPOL 2010L with 36% of nitrile groups and a degree of unsaturation greater than 4%, ZETPOL 2010H with 36% of nitrile groups and a degree of unsaturation greater than 4%, ZETPOL 2020 with 36% of nitrile groups and a degree of unsaturation greater than 5.5%, ZETPOL 2020L with 36% of nitrile groups and a degree of unsaturation greater than 5.5%.

Even more advantageously also an elastomeric material formed of a mixture of one or more copolymers, obtained from a diene monomer and a monomer containing nitrile groups where one or more of said copolymers have the addition of an acid or a salt of an unsaturated carboxylic acid, is used in combination with a first elastomeric material. More advantageously the unsaturated carboxylic acid is methacrylic or acrylic acid and said salt is a zinc salt of the methacrylic or acrylic acid. Even more advantageously a zinc salt of the methacrylic acid is used. Even more advantageously the zinc salt of the methacrylic acid is added in a quantity ranging from 10 to 60 phr.

For example, the elastomers sold by Zeon under the names: ZSC 1295, ZSC 2095, ZSC 2195, ZSC 2295, ZSC 2295L, ZSC 2295R and ZSC 2395 are advantageously used.

In particular it is possible to partially or entirely replace the HNBR previously cited, namely the ZETPOL and/or THERBAN, with a ZSC that comprises an unsaturated carboxylic acid and zinc oxide and/or with THERBAN ART which comprises a salt of the unsaturated carboxylic acid.

Mixed compounds of polyolefins and rubbers containing units of acrylonitrile are also preferred, more preferably compounds containing a copolymer of ethylene with NBR or HNBR or the above-mentioned modified HNBR. For example, rubbers containing EPDM (ethylene-propylene diene monomer) or EPM (ethylene-propylene monomer) can be added to polymers containing units of acrylonitrile in a quantity preferably ranging from 1 to 30%.

In addition to the elastomeric materials, the body compound can comprise conventional additives such as, for example, reinforcing agents, fillers, pigments, stearic acid, accelerators, vulcanization agents, antioxidants, activators, initiators, plasticizers, waxes, prevulcanization inhibitors, antidegradants, process oils and similar.

In one aspect of the present invention the cords 3 are formed of a plurality of threads or strands or yarns and each thread is formed of a plurality of filaments.

Preferably the cords 3 are made of at least one material chosen from the group consisting of glass fibres, aramid fibres, carbon fibres, PBO fibres, even more preferably they have at least outer filaments made of glass, since said material has proved to be particularly critical when it has to be used at low temperatures.

Alternatively, it is possible for the cords to be made of two different fibrous materials.

Even more preferably, at least the outer surface of the cords is made of glass fibres.

Advantageously the work surface of the transmission belt 10 is covered by a covering. The covering is more advantageously chosen from the group consisting of woven fabric, knitted fabric and non-woven fabric.

More advantageously if a woven fabric is used, the covering comprises elastic threads that extend in the longitudinal direction of the toothed belt. Generally said longitudinal threads are defined as weft threads.

According to a preferred embodiment of the present invention the covering of the transmission belt work surface is treated with at least a first and/or a second protection treatment of the covering or adhesivization of the covering.

Advantageously it undergoes a first protective treatment of the covering with RFL.

More advantageously it also undergoes a second protective treatment of the covering 8 comprising a second elastomeric material different from or equal to the one forming the body of the belt.

More advantageously the second protective treatment of the covering also comprises a non-friction material, for example chosen from the group consisting of copper powder, molybdenum sulphide, graphite and a fluorinated homo- or copolymer or mixtures thereof.

Even more advantageously the non-friction material is a PTFE.

Advantageously an elastomeric material comprising one or more copolymers formed from a monomer containing nitrile groups and from a diene is used as elastomeric material for the covering.

Advantageously the monomers containing the nitrile groups are in a percentage ranging from 15 to 60% relative to the total of the final copolymers.

More advantageously the third elastomeric material is similar to first elastomeric material. More advantageously the third elastomeric material comprises nitrile rubbers, advantageously butadiene-acrylonitrile rubbers, known by the acronym NBR. Even more advantageously it comprises hydrogenated nitrile butadiene rubbers or HNBR or also XHNBR, namely hydrogenated and carboxylated nitrile butadiene rubbers.

By appropriately choosing the quantities of component materials, the protective treatment of the covering can form a covering layer distinct and separate from the covering itself also called, below, resistant layer. The resistant layer constitutes in this case the actual work surface of the belt and therefore further increases the resistance to wear in dry conditions and avoids for example the absorption of oil if the belt is used continuously in oil.

Advantageously the non-friction material is present in the resistant layer in a higher phr quantity than the second elastomeric material.

The thickness of the resistant layer advantageously ranges from 0.03 mm to 0.2 mm.

The resistant layer can be arranged on the covering in different ways. Preferably it is arranged by means of a calendering step.

Preferably in order to ensure the necessary resistance, the resistant layer has a weight ranging from 50 to 400 g/m².

Preferably also the back of the belt is covered by a back covering, preferably equal to the one previously described and preferably comprising one or more treatments and even more preferably a resistant covering layer similar to the resistant covering layer of the work surface.

From an examination of the characteristics of the belt produced according to the present invention, the advantages it offers are obvious.

In particular the belt of the present invention can be used in transmission systems that have simultaneously toothed pulleys and poly-V pulleys, furthermore it has been experimentally verified that it can be used in high speed and high torque transmission systems providing a low noise level and, in this way, solving the above-mentioned technical problems.

## Claims

1. A transmission system (1) comprising a toothed pulley (8) and a poly-V pulley (3, 11) and a transmission belt (10), said transmission belt comprising a body (13) comprising a first elastomeric material, a plurality of cords (14) and a plurality of V-shaped ribs (19) arranged side by side to one other and alternating with V-shaped grooves (20) capable to cooperate with the poly-V pulley, **characterised in that** it comprises at least a first toothing (26) and a second toothing (27) both capable to cooperate with the toothed pulley formed by a plurality of teeth (28, 29) and extending obliquely to the transversal axis A of the belt forming therewith respective helix (alpha, beta) angles different from 0°.

2. The transmission system (1) according to claim 1, **characterised in that** said first toothing (26) and said second toothing (27) have helix angles opposite with respect to said axis A.

3. The transmission system (1) according to claim 1 or 2, **characterised in that** the first toothing (26) has an alpha helix angle comprised between 10° and 45° or between -10° and -45° and the second toothing (27) has a beta helix angle comprised between 10° and 45° or between -10° and -45°, preferably said alpha helix angle is comprised between -20° and -10° and said beta helix angle is comprised between 20° and 10°.

4. The transmission system (1) according to any one of the preceding claims, **characterised in that** said alpha helix angle has an equal value but opposite sign with respect to said beta helix angle.

5. The transmission system (1) according to any one of the preceding claims, **characterised in that** the first toothing (26) has a pitch comprised between 5 and 14 mm and the second toothing (27) has a pitch comprised between 5 and 14 mm, preferably the first toothing (26) has a pitch P1 comprised between 8 and 11 mm and the second toothing (27) has a pitch P2 comprised between 8 and 11 mm.

6. The transmission system (1) according to any one of the preceding claims, **characterised in that** the ribs (19) have a pitch Q1 comprised between 2 and 5 mm.

7. The transmission system (1) according to any one of the preceding claims, **characterised in that** the first toothing (26) is staggered with respect to the second toothing (27), preferably by a distance D comprised between 10% and 90% of the largest between P1 and P2.

8. The transmission system (1) according to any one of the preceding claims, **characterised in that** the height H1 of the plurality of teeth (28,29) is greater than the height H2 of the ribs (20).

9. The transmission system (1) according to any one of the preceding claims, **characterised in that** said first elastomeric material comprises a material selected from the group consisting of: natural rubber (NR), polychloroprene (CR), butadiene-acrylonitrile rubber (NBR) and relative hydrogenated elastomers known as hydrogenated nitrile butadiene rubbers (HNBR) or zinc salts of hydrogenated acrylonitrile butadiene rubber grafted with esters of unsaturated carboxylic acid, polyisoprene, styrene-butadiene rubbers, ethylene-alpha-olefin elastomers, EPDM, polyurethane, fluoroelastomers, ethylene acrylic elastomers (AEM), bromobutyl, chlorosulfonated polythene (CSM) or chlorosulfonated alkyl, chlorinated polythene, epoxidized natural rubber, SBR, carboxylated NBR, carboxylated HNBR, ACM and mixtures of these compounds.

10. The transmission system (1) according to any one of the preceding claims, **characterised in that** said first elastomeric material is a copolymer of polyolefin or a rubber containing units of acrylonitrile.

11. The transmission system according to any of claims 1 to 10, **characterised in that** it comprises a reversible electric machine (5).

12. The transmission system according to any of claims 1 to 11, **characterised in that** said toothed pulley (8) has a diameter smaller than the diameter of the poly-V pulley/pulleys (3, 6).

## Patentansprüche

1. Getriebesystem (1) umfassend eine Zahnriemenscheibe (8) und eine Poly-V-Riemenscheibe (3, 11) und einem Transmissionsriemen (10), wobei der Transmissionsriemen einen Körper (13) aufweist, der ein erstes elastomeres Material, eine Vielzahl von Strängen (14) und eine Vielzahl von V-förmigen Rippen (19) aufweist, die nebeneinander angeordnet sind und sich mit V-förmigen Nuten (20) abwechseln, die mit der Poly-V-Riemenscheibe zusammenwirken können, **dadurch gekennzeichnet, dass** es mindestens eine erste Verzahnung (26) und eine zweite Verzahnung (27) aufweist, die beide mit der aus einer Vielzahl von Zähnen (28, 29) gebildeten Zahnriemenscheibe zusammenwirken können und sich schräg zur Querachse A des Riemens erstrecken und mit dieser jeweils einen von 0° verschiedenen Helixwinkel (Alpha, Beta) bilden.

2. Getriebesystem (1) nach Anspruch 1, **dadurch gekennzeichnet, dass** die erste Verzahnung (26) und die zweite Verzahnung (27) in Bezug auf die Achse A entgegengesetzte Helixwinkel aufweisen.

3. Getriebesystem (10) nach Anspruch 1 oder 2, **dadurch gekennzeichnet, dass** die erste Verzahnung (26) einen Alpha-Helixwinkel zwischen 10° und 45° oder zwischen -10° und - 45° aufweist und die zweite Verzahnung (27) einen Beta-Helixwinkel zwischen 10° und 45° oder zwischen -10° und -45° aufweist, wobei der Alpha-Helixwinkel vorzugsweise zwischen - 20° und -10° und der Beta-Helixwinkel zwischen 20° und 10° liegt.

4. Getriebesystem (1) nach einem der vorhergehenden Ansprüche, **dadurch gekennzeichnet, dass** der Alpha-Helixwinkel einen gleichen Wert, aber ein entgegengesetztes Vorzeichen in Bezug auf den Beta-Helixwinkel hat.

5. Getriebesystem (1) nach einem der vorhergehenden Ansprüche, **dadurch gekennzeichnet, dass** die erste Verzahnung (26) eine Teilung zwischen 5 und 14 mm und die zweite Verzahnung (27) eine Teilung zwischen 5 und 14 mm hat, wobei die erste Verzahnung (26) vorzugsweise eine Teilung P1 zwischen 8 und 11 mm aufweist und wobei die zweite Verzahnung (27) eine Teilung P2 zwischen 8 und 11 mm aufweist.

6. Getriebesystem (1) nach einem der vorhergehenden Ansprüche, **dadurch gekennzeichnet, dass** die Rippen (19) eine Teilung Q1 zwischen 2 und 5 mm aufweisen.

7. Getriebesystem (1) nach einem der vorhergehenden Ansprüche, **dadurch gekennzeichnet, dass** die erste Verzahnung (26) gegenüber der zweiten Verzahnung (27) versetzt ist, vorzugsweise um einen Abstand D, der zwischen 10 % und 90 % des größten Abstandes zwischen P1 und P2 beträgt.

8. Getriebesystem (1) nach einem der vorhergehenden Ansprüche, **dadurch gekennzeichnet, dass** die Höhe H1 der Vielzahl von Zähnen (28) und (29) größer ist als die Höhe H2 der Rippen (20).

9. Getriebesystem (1) nach einem der vorhergehenden Ansprüche, **dadurch gekennzeichnet, dass** das erste Elastomermaterial ein Material umfasst, das ausgewählt ist aus der Gruppe bestehend aus: Naturkautschuk (NR), Polychloropren (CR), Butadien-Acrylnitril-Kautschuk (NBR) und entsprechende hydrierte Elastomere, die als hydrierte Nitril-Butadien-Kautschuke (HNBR) oder Zinksalze von hydriertem Acrylnitril-Butadien-Kautschuk, der mit Estern ungesättigter Carbonsäuren gepfropft ist, bekannt sind, Polyisopren, Styrol-Butadien-Kautschuke, Ethylen-Alpha-Olefin-Elastomere, EPDM, Polyurethan, Fluorelastomere, Ethylen-Acryl-Elastomere (AEM), Brombutyl, chlorsulfoniertes Polyethylen (CSM) oder chlorsulfoniertes Alkyl, chloriertes Polyethylen, epoxidierter Naturkautschuk, SBR, carboxylierter NBR, carboxylierter HNBR, ACM und Mischungen dieser Verbindungen.

10. Getriebesystem (1) nach einem der vorhergehenden Ansprüche, **dadurch gekennzeichnet, dass** das erste elastomere Material ein Copolymer aus Polyolefin oder ein Kautschuk mit Acrylnitrileinheiten ist.

11. Getriebesystem nach einem der Ansprüche 1 bis 10, **dadurch gekennzeichnet, dass** es eine reversible elektrische Maschine (5) umfasst.

12. Getriebesystem nach einem der Ansprüche 1 bis 11, **dadurch gekennzeichnet, dass** die Zahnscheibe (8) einen kleineren Durchmesser als der Durchmesser der Poly-V-Riemenscheibe(n) (3, 6) hat.

## Revendications

1. Système de transmission (1) comprenant une poulie dentée (8) et une poulie poly-V (3, 11) et une courroie de transmission (10), ladite courroie de transmission comprenant un corps (13) comprenant un premier matériau élastomère, une pluralité de cordes (14) et une pluralité de nervures en V (19) agencées côte à côte et en alternance avec des rainures en V (20) capables de coopérer avec la poulie poly-V, **caractérisé en ce qu'**il comprend au moins une première denture (26) et une seconde denture (27) toutes deux capables de coopérer avec la poulie dentée formée par une pluralité de dents (28, 29) et s'étendant obliquement par rapport à l'axe transversal A de la courroie en formant avec celle-ci des angles d'hélice (alpha, bêta) respectifs différents de 0°.

2. Système de transmission (1) selon la revendication 1, **caractérisé en ce que** ladite première denture (26) et ladite seconde denture (27) présentent des angles d'hélice opposés par rapport audit axe A.

3. Système de transmission (1) selon la revendication 1 ou 2, **caractérisé en ce que** la première denture (26) présente un angle d'hélice alpha compris entre 10° et 45° ou entre -10° et -45° et la seconde denture (27) présente un angle d'hélice bêta compris entre 10° et 45° ou entre -10° et -45°, de préférence ledit angle d'hélice alpha est compris entre -20° et -10° et ledit angle d'hélice bêta est compris entre 20° et 10°.

4. Système de transmission (1) selon l'une quelconque des revendications précédentes, **caractérisé en ce que** ledit angle d'hélice alpha présente une valeur égale mais un signe opposé à celui dudit angle d'hélice bêta.

5. Système de transmission (1) selon l'une quelconque des revendications précédentes, **caractérisé en ce que** la première denture (26) présente un pas compris entre 5 et 14 mm et la seconde denture (27) présente un pas compris entre 5 et 14 mm, de préférence la première denture (26) présente un pas P1 compris entre 8 et 11 mm et la seconde denture (27) présente un pas P2 compris entre 8 et 11 mm.

6. Système de transmission (1) selon l'une quelconque des revendications précédentes, **caractérisé en ce que** les nervures (19) présentent un pas Q1 compris entre 2 et 5 mm.

7. Système de transmission (1) selon l'une quelconque des revendications précédentes, **caractérisé en ce que** la première denture (26) est décalée par rapport à la seconde denture (27), de préférence d'une distance D comprise entre 10 % et 90 % du plus grand de P1 et P2**.**

8. Système de transmission (1) selon l'une quelconque des revendications précédentes, **caractérisé en ce que** la hauteur H1 de la pluralité de dents (28, 29) est supérieure à la hauteur H2 des nervures (20).

9. Système de transmission (1) selon l'une quelconque des revendications précédentes, **caractérisé en ce que** ledit premier matériau élastomère comprend un matériau choisi parmi le groupe constitué de : caoutchouc naturel (NR), polychloroprène (CR), caoutchouc butadiène-acrylonitrile (NBR) et élastomères hydrogénés relatifs connus sous le nom de caoutchoucs nitrile-butadiène hydrogénés (HNBR) ou sels de zinc de caoutchouc - acrylonitrile-butadiène hydrogéné greffés avec des esters d'acide carboxylique insaturé, polyisoprène, caoutchoucs styrène-butadiène, élastomères éthylène-alpha-oléfine, EPDM, polyuréthane, fluoroélastomères, élastomères acryliques d'éthylène (AEM), bromobutyle, polyéthylène chlorosulfoné (CSM) ou alkyle chlorosulfoné, polyéthylène chloré, caoutchouc naturel époxydé, SBR, NBR carboxylé, HNBR carboxylé, ACM et mélanges de ces composés.

10. Système de transmission (1) selon l'une quelconque des revendications précédentes, **caractérisé en ce que** ledit premier matériau élastomère est un copolymère de polyoléfine ou un caoutchouc contenant des unités d'acrylonitrile.

11. Système de transmission selon l'une quelconque des revendications 1 à 10, **caractérisé en ce qu'**il comprend une machine électrique réversible (5).

12. Système de transmission selon l'une quelconque des revendications 1 à 11, **caractérisé en ce que** ladite poulie dentée (8) présente un diamètre inférieur au diamètre de la poulie/des poulies poly-V (3, 6).
